# EUROPEAN PATENT SPECIFICATION

(11) **EP 1 445 084 B1**
(45) Date of publication and mention of the grant of the patent: **18.03.2009**
(21) Application number: 04250611.3
(22) Date of filing: 05.02.2004
(51) Int. Cl.: B29C 39/10, B32B 17/10

(54) **A method of forming a decorative glass/resin laminate**
Verfahren zur Herstellung eines dekorativen Glas-Kunststoff-Laminates
Procédé de fabrication d'un laminé décoratif verre-résine

(30) Priority: 07.02.2003 GB 0302755
(43) Date of publication of application: 11.08.2004
(73) Proprietor: Group Four Glassfibre Co. Limited, Murston SIttingbourne Kent ME10 3RS (GB)
(72) Inventor: Cox, Trevor David, Gillingham Kent ME8 0PL (GB); Elliot, Stephen James, Gillingham Kent ME8 6ES (GB)
(74) Representative: Lucas, Brian Ronald

(56) References cited:
- EP-A- 0 368 816
- EP-A- 0 908 287
- DE-A- 1 529 861
- US-A- 4 795 667
- US-A- 5 622 580
- US-A- 5 783 264

## Description

### Field of the invention

The present invention relates to a method of forming a decorative sheet for use as a window panel, door panel or mirror and having the appearance of textured glass or deeply contoured glass.

### Background to the invention

In order to obtain brilliant cut or bevelled glass a process is used in which CNC (computerized numerical control) machines use diamond tipped heads cooled with water to cut grooves and curved shapes into a glass surface. This process requires expensive equipment and is difficult and expensive to carry out for complex patterns and for a large number of panels.

US Patent 5783264 (Howes) is concerned with the production of windows having the appearance of textured and deeply contoured glass, and contains a review of attempts to make such articles up to the beginning of the 1990's. In particular it identifies one method of making such articles that involves forming a mould over the surface of an original article using silicone. Then, the formed mould is then filled with a resin, which is allowed to cure within the mould before it is removed as a replica. Traditional mould release agents, such as Teflon or silicone, have been sprayed on solid surfaces, to prevent adhesion between the mould material and the cured resin replica articles.

However, the removal of a silicone mould from a glass master posed particular problems. The adhesive forces between the silicone and the glass were so great that using conventional prior art mould release agents as few as one in twenty moulds were successfully removed from the masters without serious damage. Furthermore, the use of traditional mould release agents, applied to the master before pouring the mould, rendered the mould unacceptable for producing replicas of adequate quality since the mould release agents left impressions in the mould that were subsequently transferred to the replicas as roughened surfaces. Due to the intended use of replicas to transmit light and to produce aesthetic effects similar to those produced by cut and polished glass surfaces, the production of plastic decorative glass replicas is much more sensitive to blemishes than is the production of virtually all other plastic parts by moulding processes.

One disclosed solution to the prior art problems of using the decorative glass replica in architectural applications, such as doors and windows, was forming the plastic decorative layer on a conventional glass pane, which then acted as a backing for the decorative plastic layer. A technical problem still requiring resolution was the adhesion between the cured resin plastic layer and the glass pane used as the backing plate. The disclosed solution involves production of a decorative window in which a thick transparent resin layer is laminated to a sheet of glass. The resin layer can be decorative and can have a finely textured surface. Howes goes on to describe a method of forming such a structure by forming a silicone mould made from a master using a silicone elastomer, placing the mould over a sheet of glass which has been coated with an adherent layer, filling the mould with resin, allowing the resin to set and removing the mould. The adherent layer disclosed is formed of an organosilane and the resin disclosed is a polyester resin which is mixed with an organosilane ester and a small amount of a peroxide catalyst so that after the mould has been filled with resin the resin hardens to form a structure and the mould can then be removed.

However, the presence of the organosilane ester, and in particular the use of a mould of silicone elastomer (rubber) adversely affects curing of the surface of the polyester resin leaving it sticky to the touch. This means that extreme care needs to be taken once the silicone mould has been removed since the sticky surface of the moulded-on resin layer is easily contaminated with dust, debris and finger marks, which cannot be removed without showing evidence. In addition the use of silicone rubber moulds requires direct heating of the resin to bring about an effective cure. The resin can react with the mould to bring about styrenisation of the mould so that that after a number of castings the mould has to be thoroughly cleaned, washed and dried. Silicone rubber moulds eventually lose their flexibility and hairline cracks appear which render the mould useless.

US-A-4795667 discloses a window assembly which can be used as a vehicle backlight including a transparent sheet having a layer of retention material adhered thereto, and a method and apparatus for producing such a window assembly. The apparatus includes at least two cooperating mould sections having facing surfaces defining a chamber for receiving the transparent sheet which can be shaped for use as a vehicle backlight. A seal is positioned about a periphery of a predetermined area on a surface of the transparent sheet on which the film is to be formed. The seal, the predetermined surface area of the transparent sheet and the mould define a forming cavity into which is injected a thermosetting polyurethane material. The material is at least partially cured in the cavity. Thereafter, the window assembly is removed from the mould chamber with a polyurethane retention shield adhered to the predetermined surface area.

DE-A-1529861 discloses a method for producing glass-plastic composites for eye-protection glasses, lenses, prisms and the like. Glass is placed into a heated mould of an injection moulding machine, after which curable monomer is applied to a surface of the glass.

### Summary of the invention

In one aspect the invention provides a method of moulding a pattern onto a sheet for use as a window panel, door panel or mirror to give the appearance of textured glass or deeply contoured glass, which method has the features set out in claim 1 of the accompanying claims

### Description of preferred features

An original for providing a moulding pattern may be a sheet of glass e.g. formed with a decorative bevelled and/or engraved pattern and having regions formed with decorative surface texture. Alternatively these features may be formed in a sheet of readily formed material e.g. acrylate or other plastics sheet.

For creation of a mould from the original, it is treated with a release agent, after which a mould of the type described below is built up layer by layer, allowed to cure and then removed.

The mould surface may be comprised of any substantially inelastic material, and preferably the mould is made of a substantially inelastic material. The mould used may be based on glass or other fibre reinforced plastics of sufficient rigidity e.g. 1-5 mm to be self-supporting. It may have a top or gel coating of polyester, vinyl ester, epoxy or metal, with vinyl ester being preferred. Advantageously it comprises at least one area for pattern creation bounded by one or more grooves for receiving sealing strip of elastomeric material. Silicone elastomers have been found to be suitable for the sealing strip, and Shore-A hardnesses of about 40-80, preferably 60-80 may be appropriate. The sealing strip may be of height about 10 mm and of width about 5 mm, and it should preferably be compressible under the intended moulding conditions to bring about approximately a 10% reduction in its height to effect sealing of the mould cavity and to provide energy to effect release of a cured glass-resin laminate from the mould. The sealing strip or strips are located in the groove or grooves in the mould and the height of the strip projecting above the surface of the mould controls the thickness of the resin layer produced on the eventual glass surface. Preferably there is a release agent such as gel, oil or wax, or chemical release agent on the surface of the mould so that the mould is readily releaseable from cured resin. The substantially inelastic material forming the mould surface may be reinforced by a material to form a rigid structure. If required the surface of the mould may be patterned so that surface effects can be formed on the casting. Furthermore, the mould may be divided into separate sections and different casting resins may be introduced in different sections e.g. so that different sections can have different colours.

The sheet may be clear or it may be coloured or decorated as required. If the sheet is silvered, aluminised or otherwise metallised, a mirror can be formed. The sheet is preferably of glass, but it may also be a rigid resin or plastics sheet or the like.

A glass sheet is preferably coated with a layer to improve bonding of the resin to the glass. A suitable layer is a silane or mixture of silanes in solution e.g. in water or an alcohol. Advantageously the or at least one of the silanes both has a group that is reactive with the surface of the glass sheet and a group having ethylenic unsaturation for copolymerization into the transparent casting material used in the subsequent moulding step, e.g. an α,β-unsaturated ester structure connected to silicon by an at least C₂ chain as in γ-methacryloxypropyltrimethoxysilane. Additional or alternative adhesion promoters may be based on e.g. on vinyltrimethoxysilane and other organosilanes containing vinyl, α,β-unsaturated keto or α,β-unsaturated ester groups differing in chain length.

To form the structure of the invention the mould is preferably positioned so that it is at an angle to the horizontal and the glass sheet is clamped to the mould to form a mould cavity. There is an inlet at the lower end of the mould where casting resin can be introduced and an air outlet at the top of the mould. Casting resin together with hardener is introduced into the mould at its lowest point and progressively fills the mould. Displaced air goes out through the air outlet. This procedure reduces the possibility of air bubbles being formed.

The casting resin is preferably a resin which, when it cures, forms a hard transparent glass-like surface on the sheet, such as a polyester e.g. an acrylate or polyacrylate which is introduced into the mould cavity with a hardener so that it cures to form a hard resin. As the mould is not made of silicone elastomer, surface cure of at least the major or image-bearing face of the casting resin is not impaired, and cure of the casting resin can progress substantially to completion without the necessity for direct heating. The surface of the resulting cast resin structure is fully cured and is hard and dry to the touch. This allows sheets decorated with the casting resin to be used in a single-glazed environment e.g. to produce mirrors, door panels, kitchen doors and shower screens. The casting resin can be encapsulated within an insulated glass unit e.g. a double glazing unit formed from first and second glass layers permanently fastened and sealed together or applied to the surface of such a unit.

In the case of a glass sheet, very desirably the casting resin has substantially the same refractive index as the sheet. The resin then picks up the colour of the glass so that the bevels formed in the resin coating layer really look as if they were made of glass. The refractive index of window glass (crown glass) is typically 1.51-1.55 whereas that of polymethyl methacrylate is about 1.49. Matching of refractive index can be achieved by using a copolymer of a vinyl aromatic compound which has a refractive index of e.g. 1.58-1.6 when polymerised and a copolymerisable vinyl monomer as disclosed, for example, in US-A-3968073 (Hara; Mitsui Toatsu Chemicals) and 4344906 (Kitagawa, Sumitomo Chemical Company).

As vinyl aromatic monomers there may be mentioned styrene, vinyltoluene, αmethylstyrene, α-methyl-p-methylstyrene, α-methyl-m-methylstyrene, vinylxylene, α-methylvinylxylene, α-chlorostyrene, p-chlorostyrene, m-chlorostyrene, α-methyl-p-chlorostyrene, α-methyl-m-chlorostyrene and α-chlorovinylxylene, which may be used individually or as mixtures of two or more of the above compounds. For the industrial purpose, styrene is most preferred, followed by vinyltoluene and α-methylstyrene.

As polymerizable vinyl monomer there may be mentioned methyl methacrylate which is preferred and additionally acrylic acid, methacrylic acid, methyl acrylate, ethyl acrylate, ethyl methacrylate, isopropyl acrylate, isopropyl methacrylate, n-propyl acrylate, n-propyl methacrylate, isobutyl acrylate, isobutyl methacrylate, tert-butyl acrylate, tert-butyl methacrylate, n-butyl acrylate, n-butyl methacrylate, cyclohexyl acrylate, cyclohexyl methacrylate, β-hydroxyethyl acrylate, β-hydroxyethyl methacrylate, β-hydroxypropyl acrylate, β-hydroxypropyl methacrylate, glycidyl acrylate, glycidyl methacrylate, 2-cyanoethyl acrylate, 2-cyanoethyl methacrylate, β-ethoxyethyl acrylate, β-ethoxyethyl methacrylate, 2-ethylhexyl acrylate, 2-ethylhexyl methacrylate, acrylonitrile, methacrylonitrile, *N,N* dimethylaminoethyl methacrylate, acrylamide, methacrylamide, diacetone acrylamide, vinyl acetate and vinyl chloride, which may be used alone, in admixture and as co-monomers with methyl methacrylate.

A typical casting mixture of type known for making transparent glass-fibre impregnated sheets could, for example comprise 30 parts by weight of a copolymer of styrene (26 wt %) and methyl methacrylate (74 wt %) dissolved in 70 parts by weight of a monomer mixture comprising styrene (21.7 wt %), methyl methacrylate (74 wt %), ethylene glycol dimethacrylate (1.43 wt %) and maleic anhydride (2.86 wt %) which immediately before casting is mixed with an initiator such as benzoyl peroxide. Casting mixtures based on methyl methacrylate and styrene or other aromatic monomer advantageously incorporate a flexible polyester which not only gives rise to a scratch resistant and mar-resistant slip surface but also imparts flexibility and reduces shrinkage on moulding. Some moulding resins in addition to being too brittle exhibit about 6-7% shrinkage on curing which creates undue stress when they are applied as coatings to workpieces which may typically be 1 metre in length. In extreme cases the forces created on curing the coating material may be sufficient to bring about objectionable mechanical deformation of a previously flat sheet. Preferably the moulding resin is formulated to have linear shrinkage of 5% or less and most preferably 2% or less while being strongly adherent to the glass sheet either intrinsically or using a bonding agent as described above. Crystalite resin described below has an appropriate combination of properties and is preferred for use in the invention.

A preferred moulding method which avoids development of unwanted air bubbles involves the step of positioning the mould so that the mould cavity is inclined to the horizontal,
introducing said curable resin in a position proximate the lowest point of said mould cavity, and
venting air displaced by said curable resin from said mould cavity at a position proximate the uppermost point of said mould cavity.

### Brief description of the drawings

How the invention may be put into effect will now be described with reference to the following drawings, in which:

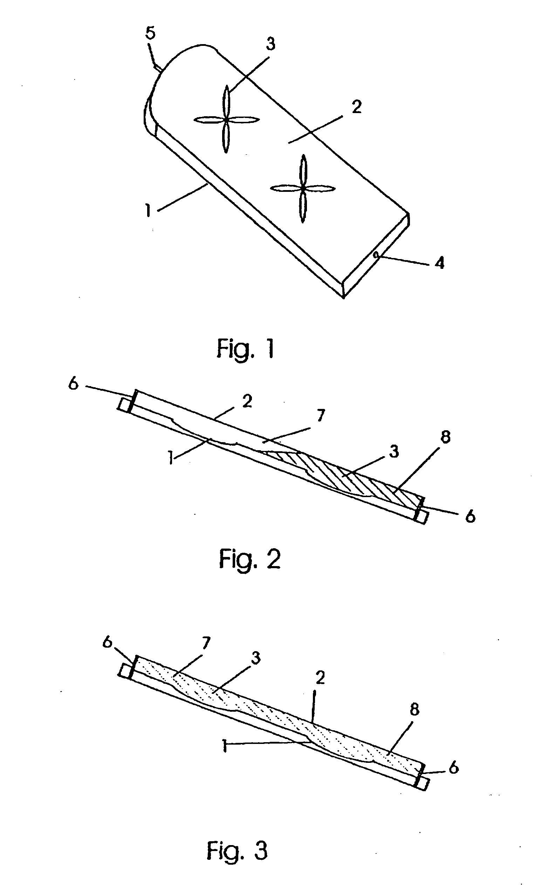

Fig. 1 shows a schematic view of a mould;
Fig. 2 shows a side view of the mould partially filled with resin;
Fig. 3 shows a side view of the mould full of resin;
Fig 4 is a diagrammatic sectional view of a mould, glass panel and one of a plurality of clamps according to a second embodiment of the invention; and
Fig 5 is a plan view of a mould looking at a gel-coated moulding face thereof.

### Description of preferred embodiments

The invention will now be further described in the following examples.

### Example 1

A substantially inelastic mould 1 is coated with a release agent and has silicone rubber strips 6 located in grooves in the mould to define an area of the mould. Transparent glass sheet 2 is placed on the silicon rubber strips and clamped in place to define a mould cavity 7 between the mould 1 and the glass sheet 2. An acrylate resin and hardener 8 is introduced into the mould at the inlet 4 to fill the mould cavity 7 and the displaced air exits at outlet 5. After about 60 minutes at ambient temperature the resin cures to form a hard transparent resin adhered to the glass sheet 2, and the mould is unclamped and separated from the glass sheet. The glass sheet with a contoured decorative surface can then be used e.g. as window or door panel and the like.

### Example 2

An original of a contoured decorative design to be applied as a layer to a sheet is formed by cutting an acrylic sheet, for example using a router under computerised numerical control (CNC). Areas of the original that are textured but otherwise plain are created by applying to the acrylic sheet thin adhesive film having one face formed with the desired texture and having an adhesive coating on the opposite face.

The completed original is then used to create a mould. For this purpose, the original is coated with a release agent, after which the original is coated with a top or so-called gel coat layer which is of a curable vinyl ester resin. The gel-coat layer then has applied thereto layers of resin and glass cloth in sufficient thickness e.g. about 2-3 mm to form a rigid self-supporting mould. The resin is allowed to cure and the finished mould is separated from the original.

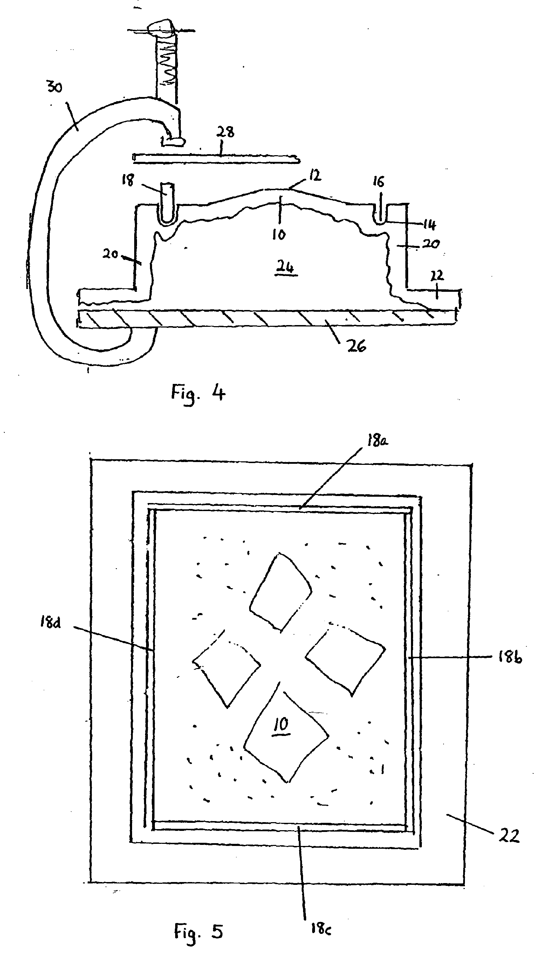

The structure of the mould which is produced in the above process is shown in Fig. 4. It has a central image-bearing region 10 whose gel-coated outer surface 12 carries a negative impression of the pattern to be reproduced. The region 10 is bounded by a peripheral region 14 which presents to the moulding surface 12 a peripheral grooves 16 for receiving adjustable sealing strip 18 which is a silicone rubber extrusion of Shore A hardness about 60-80, depth about 10mm and width about 5 mm. The grooves 16 are arranged so that when one or more sealing strips are inserted therein, the strip or strips surround the image-bearing region 10 without discontinuity that would allow escape of resin during the moulding step to be described below. For a rectangular panel as shown in Fig. 5 there will be four such strips 18a-18d whose ends are in contact and under slight compression to effect a seal against escape of moulding resin. Reverse flanges 20 bound the central region 10 and extend generally at right angles away from the uncoated face thereof, and they terminate in out-turned flanges 22. A void 24 defined by the central region 10 and by the flanges 20 is filled with a polyester-based filler, after which a support sheet 26 of plywood or other suitable material is offered up to close the void 24 and adhere to the out-turned flanges 22 as shown.

The completed mould can then be used to create contoured decorative structures on sheets of glass or other material. For this purpose the working face 12 of the mould is coated with a release agent, e.g. a silicone- or fluorocarbon-based release agent, and the sealing strips 18 are introduced into the grooves 16. A glass sheet 28 is treated with one or more silane-based adhesion promoters (e.g. γ-methacryloxypropyltrimethoxysilane, Silquest A-174, OSi Specialities, Inc) in iso-propanol and then contacted with the sealing strips 18, after which the assembly is secured together e.g. by clamps so as to compress the sealing strips 18 longitudinally by about 1 mm. The resulting mould cavity is then filled with a clear casting resin as described in the previous example to avoid the development of air bubbles, and allowed to cure. A preferred clear casting resin is available from Creative Resins International of Sittingbourne, Kent, UK under the trade name Crystalite The resin is conveniently injected into the mould cavity using a Crystalite injection machine available from the same suppliers. That machine is a pneumatically powered and provides accurate mixing and injection of resin systems at an output rate from 150g/min to 4kg/min. Its facilities include catalyst ratio adjustable from 0.5% to 3.0%, solvent/air flush, resin recirculation at the mix-head and a mould pressure guard that can protect the mould from excessive injection pressure, and to optimise mould fill performance. On cure of the casting resin which typically takes place in about 60 minutes, the clamps are released and recovery of the sealing strips urges the assembly of the glass panel and the cured casting resin away from the mould.

The mould is then ready for re-use and it has been found that in favourable conditions up to 20-30 contoured decorative structure creation runs can be carried out before the mould has to be re-coated with release agent.

The procedure described in this example can be used to create resin bevels (decorated sheets) several times faster than using conventional silicone rubber moulds. The finished panels exhibit a dry surface so that they are less vulnerable to contamination by fingerprints or dust. They can be stored in an upright position as soon as they have been produced and can easily be incorporated into sealed units because there are no special handling issues They can also be used as door or infill panels and the like because their exposed surfaces are both dry to the touch which differs from the toffee-like consistency of bevels made using prior silicone moulds which calls for immediate isolation from sources of dust and contamination. The resin bevels are substantially free from air bubbles in the resin layer. Furthermore, styrene emission during the manufacturing process is reduced to a degree such that the mould can be regarded as a closed system, and expensive extraction and filtering systems for removal of styrene released into the atmosphere may be unnecessary.

## Claims

1. A method of moulding a pattern onto a sheet for use as a window panel, door panel or mirror to give the appearance of textured glass or deeply contoured glass, which method comprises:
(a) providing a mould (1) which is of a material that is substantially inelastic under the moulding conditions and has at least one area (10) for pattern creation, said area having a contoured surface (12),
(b) pressing the mould (1) against a sheet (2) to form a mould cavity (7) between the sheet (2) and the mould (1), the mould having a sealing strip or strips (18) of elastomeric material bounding the area for pattern creation, the height of said sealing strip or strips above the contoured surface (12) controlling the thickness of the resin layer, and said height becoming reduced by compression of the elastomeric material under the moulding conditions to effect sealing of the mould cavity;
(c) introducing a curable casting resin (8) into the mould cavity;
(d) curing the resin to form a resin layer having a contoured decorative surface which corresponds to the contoured surface of said mould; and
(e) releasing the mould (1) to leave a laminate which comprises said resin layer adhered to said sheet (2).

2. A method as claimed in Claim 1, in which the mould (1) is formed of glass or other fibre-reinforced plastics.

3. The method of claim 1 or 2, wherein the mould 1 has a contoured surface (12) of a polymerised vinyl ester.

4. The method of any preceding claim, in which there is a groove (16) in the mould (1) in which there is or are the sealing strip or strips.

5. The method of any preceding claim, in which the sheet (2) is a transparent glass sheet.

6. The method of any of claims 1-5, in which the sheet (2) is a translucent glass sheet.

7. The method of any preceding claim, in which the curable resin is a polyester resin which, when it cures, is substantially transparent.

8. The method of claim 7, in which the curable resin comprises a hardener so that it cures to form a hard resin.

9. The method of any preceding claim, wherein the resin comprises units derived from an acrylic monomer and units derived from a vinyl aromatic monomer for matching the refractive index of the resin after curing to that of the glass.

10. The method of any preceding claim, wherein the resin comprises methyl methacrylate and styrene.

11. The method of claim 9 or 10, wherein the resin further comprises a polyester for imparting flexibility.

12. The method of any preceding claim, wherein the curable resin exhibits shrinkage on curing of about 2%.

13. The method of any preceding claim, including the step of applying a release agent selected from the group consisting of oil, wax and chemical release agent to the surface of the mould prior to step (a).

14. The method of claim 13, further comprising the step of priming the surface of the glass with an adhesion promoter before the mould is positioned against the sheet.

15. The method of any preceding claim, including the step of positioning the mould (1) so that the mould cavity (7) is inclined to the horizontal,
introducing said curable resin (8) in a position proximate the lowest point of said mould cavity, and
venting air displaced by said curable resin from said mould cavity (7) at a position proximate the uppermost point of said mould cavity (7).

## Patentansprüche

1. Verfahren zum Formen eines Musters auf eine dünne Platte für die Verwendung als Fensterglas, Türglas oder Spiegel, so daß das Aussehen von strukturiertem Glases oder von mit einer tiefen Kontur versehenem Glas verliehen wird, wobei das Verfahren umfaßt:
(a) Bereitstellen einer Form (1), die aus einem Material ist, das unter den Formgebungsbedingungen im wesentlichen unelastisch ist, und zumindest einen Bereich (10) für die Erzeugung eines Musters aufweist, wobei dieser Bereich eine mit Konturen versehene Oberfläche (12) aufweist;
(b) Pressen der Form (1) gegen eine dünnen Platte (2), so daß zwischen der dünnen Platte (2) und der Form (1) ein Formenhohlraum (7) gebildet wird, wobei die Form einen oder mehrere Dichtungsstreifen (18) aus einem elastomeren Material aufweist, womit der Bereich für die Erzeugung des Musters verbunden wird, wobei die Höhe des Dichtungsstreifens oder der -streifen über der mit Konturen versehenen Oberfläche (12) die Dicke der Harzschicht regelt und diese Höhe verringert wird, indem das elastomere Material unter den Formgebungsbedingungen zusammengedrückt wird, so daß eine Abdichtung des Formenhohlraums erfolgt;
(c) Einführen eines härtenden Gießharzes (8) in den Formenhohlraum;
(d) Härten des Harzes, so daß eine Harzschicht mit einer mit Konturen versehenen, dekorativen Oberfläche erzeugt wird, die der mit Konturen versehenen Oberfläche der Form entspricht; und
(e) Lösen der Form (1), so daß ein Laminat zurückbleibt, das die Harzschicht umfaßt, die an der dünnen Platte (2) haftet.

2. Verfahren nach Anspruch 1, wobei die Form (1) aus Glas oder anderen faserverstärkten Kunststoffen gebildet ist.

3. Verfahren nach Anspruch 1 oder 2, wobei die Form (1) eine mit Konturen versehene Oberfläche (12) aus einem polymerisierten Vinylester umfaßt.

4. Verfahren nach einem der vorstehenden Ansprüche, wobei in der Form (1) eine Nut (16) vorliegt, in sich der Dichtungsstreifen oder die -streifen befindet bzw. befinden.

5. Verfahren nach einem der vorstehenden Ansprüche, wobei die dünne Platte (2) eine durchsichtige Glasplatte ist.

6. Verfahren nach einem der Ansprüche 1 bis 5, wobei die dünne Platte (2) eine durchscheinende Glasplatte ist.

7. Verfahren nach einem der vorstehenden Ansprüche, wobei das härtende Harz ein Polyesterharz ist, das, wenn es härtet, im wesentlichen durchsichtig ist.

8. Verfahren nach Anspruch 7, wobei das härtende Harz einer Härter umfaßt, so daß es zu einem harten Harz härtet.

9. Verfahren nach einem der vorstehenden Ansprüche, wobei das Harz Einheiten, die von einem Acrylmonomer stammen, und Einheiten, die von einem aromatischen Vinylmonomer stammen, umfaßt, um den Brechungsindex des Harzes nach dem Härten dem des Glases anzupassen.

10. Verfahren nach einem der vorstehenden Ansprüche, wobei das Harz Methylmethacrylat und Styrol umfaßt.

11. Verfahren nach Anspruch 9 oder 10, wobei das Harz ferner einen Polyester umfaßt, um Flexibilität zu verleihen.

12. Verfahren nach einem der vorstehenden Ansprüche, wobei das härtende Harz eine Schrumpfung beim Härten von etwa 2 % zeigt.

13. Verfahren nach einem der vorstehenden Ansprüche, das einen Schritt einschließt, bei dem vor dem Schritt (a) auf die Oberfläche der Form ein Trennmittel aufgebracht wird, das aus der Gruppe ausgewählt ist, die aus Öl, Wachs und einem chemischen Trennmittel besteht.

14. Verfahren nach Anspruch 13, das ferner einen Schritt umfaßt, bei dem Oberfläche des Glases mit einem Adhäsionspromotor bestrichen wird, bevor die Form an der dünnen Platte angeordnet wird.

15. Verfahren nach einem der vorstehenden Ansprüche, das einen Schritt einschließt, bei dem die Form (1) so angeordnet wird, daß der Formenhohlraum (7) zur Horizontalen geneigt ist, das härtende Harz (8) in einer Stelle eingeführt wird, die nahe dem niedrigsten Punkt des Formenhohlraum ist, und die durch das härtende Harz aus dem Formenhohlraum (7) verdrängte Luft an einer Stelle abgelassen wird, die nahe dem höchsten Punkt dieses Formenhohlraums (7) ist.

## Revendications

1. Procédé de moulage d'un motif sur une plaque à utiliser en tant que panneau de fenêtre, panneau de porte ou miroir afin de donner l'apparence d'un verre texturé ou d'un verre profilé en profondeur, lequel procédé comprend les étapes consistant à :
a) fournir un moule (1) qui est constitué d'un matériau qui est essentiellement non élastique dans les conditions de moulage et présente au moins une zone (10) destinée à une création de motif, ladite zone présentant une surface profilée (12) ;
b) presser le moule (1) contre une plaque (2) pour former une cavité de moule (7) entre la plaque (2) et le moule (1), le moule comportant une bande ou des bandes d'étanchéité(18) de matériau élastomère limitant la zone en vue d'une création de motif, la hauteur de ladite (desdites) bande(s) d'étanchéité au-dessus de la surface profilée (12) commandant l'épaisseur de la couche de résine, et ladite hauteur se réduisant par compression du matériau élastomère dans les conditions de moulage pour réaliser l'étanchéité de la cavité de moule ;
c) introduire une résine de moulage durcissable (8) dans la cavité de moule ;
d) traiter la résine pour former une couche de résine présentant une surface décorative profilée qui correspond à la surface profilée dudit moule ; et
e) libérer le moule (1) pour laisser subsister un laminé qui comporte ladite couche de résine ayant adhéré à ladite plaque (2).

2. Procédé selon la revendication 1, dans lequel le moule (1) est formé de verre ou d'autres matières plastiques à renforcement de fibres.

3. Procédé selon la revendication 1 ou 2, dans lequel le moule 1 présente une surface profilée (12) constituée d'un ester de vinyle polymérisé.

4. Procédé selon l'une quelconque des revendications précédentes, dans lequel il y a une rainure (16) dans le moule (1) dans laquelle se trouve(nt) la bande ou les bandes d'étanchéité.

5. Procédé selon l'une quelconque des revendications précédentes, dans lequel la plaque (2) est une plaque de verre transparente.

6. Procédé selon l'une quelconque des revendications 1 à 5, dans lequel la plaque (2) est une plaque de verre translucide.

7. Procédé selon l'une quelconque des revendications précédentes, dans lequel la résine durcissable est une résine de polyester, laquelle, lorsqu'elle durcit, est essentiellement transparente.

8. Procédé selon la revendication 7, dans lequel la résine durcissable comporte un durcisseur de façon qu'elle durcisse pour former une résine dure.

9. Procédé selon l'une quelconque des revendications précédentes, dans lequel la résine comporte des unités dérivées d'un monomère acrylique et des unités dérivées d'un monomère aromatique vinylique pour adapter l'indice de réfraction de la résine après traitement à celui du verre.

10. Procédé selon l'une quelconque des revendications précédentes, dans lequel la résine comprend du méthacrylate de méthyle et du styrène.

11. Procédé selon la revendication 9 ou 10, dans lequel la résine comprend, de plus, un polyester pour communiquer de la souplesse.

12. Procédé selon l'une quelconque des revendications précédentes, dans lequel la résine durcissable présente un retrait après traitement de 2% environ.

13. Procédé selon l'une quelconque des revendications précédentes, comportant l'étape consistant à appliquer un agent de démoulage sélectionné à partir du groupe constitué par l'huile, la cire et un agent de démoulage chimique sur la surface du moule avant l'étape (a).

14. Procédé selon la revendication 13, comprenant, de plus, l'étape consistant à appliquer une couche de fond sur la surface du verre, constituée d'un promoteur d'adhérence, avant que le moule ne soit positionné contre la plaque.

15. Procédé selon l'une quelconque des revendications précédentes, incluant l'étape consistant à positionner le moule (1) de telle sorte que la cavité de moule (7) soit inclinée par rapport à l'horizontale.
introduire ladite résine durcissable (8) dans une position voisine du point le plus bas de ladite cavité de moule, et
évacuer l'air déplacé par ladite résine durcissable provenant de ladite cavité de moule (7) au niveau d'une position proche d'un point le plus haut de ladite cavité de moule (7).
